# EUROPEAN PATENT SPECIFICATION

(11) **EP 1 364 605 B1**
(45) Date of publication and mention of the grant of the patent: **30.11.2005**
(21) Application number: 03011425.0
(22) Date of filing: 20.05.2003
(51) Int. Cl.: A47J 31/06, A47J 31/40

(54) **Cartridge for coffee and soluble products, device for the extraction of drinks from said cartridge and relevant drink production method**
Kartusche für Kaffee und wasserlösliche Produkte, Vorrichtung zur Herstellung von Getränken aus solcher Kartusche und Verfahren zur Herstellung von solchen Getränken
Cartouche pour café et produits solubles, dispositif pour la préparation de boissons à partir de telle cartouche et méthode de production correspondante

(30) Priority: 21.05.2002 IT MI20021087
(43) Date of publication of application: 26.11.2003
(73) Proprietor: Sagliaschi, Marco, 28100 Novara (IT); Macchi, Guglielmo, 20010 Ossona (IT)
(72) Inventor: Tonon, Sergio, 20020 Busto Garolfo (IT)
(74) Representative: Petruzziello, Aldo

(56) References cited:
- EP-A- 0 468 079
- GB-A- 2 023 086
- US-A- 5 242 702
- US-A- 5 325 765

## Description

The present invention relates to a cartridge or capsule to contain coffee or soluble products for the preparation of drinks in general, in particular coffee and products that are soluble in hot pressurised water, such as products in a granular or powdered form, for example, barley, powdered milk and the like, or leaf-based products, for example, tea, camomile teas, herbal teas and the like.

The present invention also relates to a device for the extraction of the drink by means of the said cartridge, and a relevant production method of a drink by way of such a cartridge and such an extraction device.

Following, a special reference will be made to a cartridge to contain powdered coffee, it being understood that such a cartridge can also be used to contain other soluble products for the production of drinks.

There are basically two types of cartridge on the market designed to contain powdered coffee: hard cartridges and flexible cartridges.

The hard cartridges, having a basically cylindrical or tapered shape, comprise two half-shells in a hard plastic material that are sealed together using heat or ultrasound. The powdered coffee is placed inside the cartridge together with a filter which is in contact with the bottom part of it.

Usually the base and/or the top of the cartridge have holes in them. In this way, when the cartridge is placed in a hot drinks machine, hot water under pressure is injected into the top of the cartridge where it passes onto the product through the holes on the top to the product held therein, thus releasing the aromas so as to produce the drink.

The drink therefore passes through the filter that holds the product in powdered form, and leaves through the holes in the bottom part of the cartridge, before being collected in the cup from which the consumer obtains the drink.

This type of hard cartridge presents a fundamental drawback in that the product inside it is exposed to the outside environment, due to the holes in the top and/or bottom of the cartridge. At the same time, these holes do not allow for high pressure to be maintained before the drink is extracted.

As can be seen, products like powdered coffee should be vacuum packed in airtight containers, otherwise they lose their fragrance and aroma in a short space of time. This is why, the hard cartridges need further airtight packaging that protects the product from contact with the environment. Packaging of this kind is usually made of a thin plastic or metal packet that contains one or more cartridges. Hard cartridges therefore entail extra costs due to packaging procedures and the presence of the packaging.

US 5 325 765 discloses a beverage filter cartridge of the hard type comprising an impermeable pierceable base, a filter element disposed in the base and an impermeable pierceable cover sealing engaged with the base to form an impermeable cartridge.

Flexible cartridges are also available on the market, comprising a cylindrical or tapered container with reduced thickness, which are open at the top to allow the powdered product to be introduced. A breakable membrane is heat-sealed to the top of this container so that the product is sealed in an airtight space inside the flexible cartridge.

When the flexible cartridge is inserted into the hot drinks machine, a pressure plate on the device pierces the membrane at the top of the cartridge, thus introducing the hot water, and a punch on the device pierces the bottom of the cartridge which allows the drink to be extracted from the cartridge. This type of drink then passes through a filter in the device, before being collected in a cup by the user.

This type of flexible airtight cartridge, does not require any subsequent airtight packaging to conserve the aroma of the product. In fact, such flexible airtight cartridges are usually packed in boxes, or cartons containing ten or more cartridges, thus providing a significant saving in packaging costs.
Nevertheless, such a flexible cartridge presents some drawbacks due to the poor quality of the drink obtained. In fact, when the hot water under pressure is injected into the cartridge the drink has to be extracted immediately, since the flexible material of which the cartridge is made cannot withstand such a temperature and such pressure. The result being that the quality of the drink is poor, because the product is exposed to pressurisation for such a short time inside the cartridge that the aromas do not dissolve completely.

Moreover, flexible cartridges of this type cause the filter of the drinks machine to get blocked, resulting in the need of frequent maintenance to and/or replacement of said filter of the drinks machine.

The aim of the present invention is to eliminate the prior art drawbacks, by providing a cartridge for coffee or soluble products that is versatile, practical, economical and easy to produce.

Another aim of the present invention is to provide a cartridge for coffee or soluble products that allows high quality drinks to be produced.

A further aim of the present invention is that of providing a cartridge for coffee or soluble products that is able to guarantee the perfect conservation of the product it contains, even for long periods of time, without the need for further packaging.

Yet another aim of this invention is to provide a cartridge for coffee or soluble products that enables packaging costs to be reduced.

According to the present invention, these aims have been achieved with the cartridge for coffee or soluble products according to the annexed independent Claim 1.

Another aim of the present invention is to provide a hot drinks machine, using cartridges for coffee or soluble products, that is able to guarantee a good quality drink and is at the same time both reliable and easy for the user to operate.
According to the present invention, these aims are achieved with the characteristics listed in the annexed independent Claim 10.

Another aim of the present invention is to provide a method of production of drinks, through the extraction of the drink from a cartridge for coffee or soluble product, that is able to guarantee the quality of the drink.

According to the present invention, this aim is achieved with the characteristics listed in the annexed independent Claim 13.

The cartridge for coffee or soluble products, relating to this invention, comprises a container designed to hold coffee or a soluble product. A filter is placed inside the container at the bottom, designed to allow the drink to flow through but stop the passage of the coffee or soluble product. Coffee or a soluble product is placed on the filter and then the container is closed by means of a lid.

In order to produce a drink the lid is first pierced to allow hot pressurised water to enter the cartridge. Then the base of the cartridge is subsequently pierced to extract the drink from the cartridge.

The characteristic peculiar to this invention is represented by the fact that the cartridge is produced in hard plastic with an airtight seal so as to make it impossible for the coffee or soluble product to come into contact with the environment, and allow for the inside of the cartridge to be pressurised for the optimum period of time.

This type of cartridge has two advantages. In fact, the coffee or soluble product is closed inside its airtight container, therefore the cartridge needs no further packaging, with the result that packaging costs are drastically reduced. Moreover, the rigidity and airtight nature of the cartridge allows for an optimum pressurisation time, sufficient to allow the aromas and fragrances of the coffee or soluble product to be released in the drink, with the result that the drink is of a optimum quality.

Further characteristics of the invention will become clearer from the detailed description that follows, with reference to a purely exemplifying and therefore nonlimiting embodiment thereof, illustrated in the appended drawings, in which:
Fig. 1 is an exploded, axial sectinol view, illustrating the cartridge for coffee or soluble products according to the invention;
Fig. 2 is a top view, illustrating the container of the cartridge of Fig. 1;
Fig. 3 is an axial-sectional view, according to the sectional plan III-III of Fig. 2;
Fig. 4 is a bottom view, illustrating the filter of the cartridge of Fig. 1;
Fig. 5 is a top view, illustrating the lid of the cartridge of Fig. 1;
Fig. 6 is a bottom view of the lid of Fig. 5;
Fig. 7 is an axial sectional view, illustrating the cartridge of Fig. 1 assembled and placed in a device for the extraction of a drink from the cartridge, shown schematically before the phase when the drink is extracted;
Fig. 8 is a schematic axial sectional view, as in Fig. 7, illustrating the cartridge during the drink extraction phase.

With the help of the figures there follows a description of the cartridge for coffee or soluble products according to the invention.

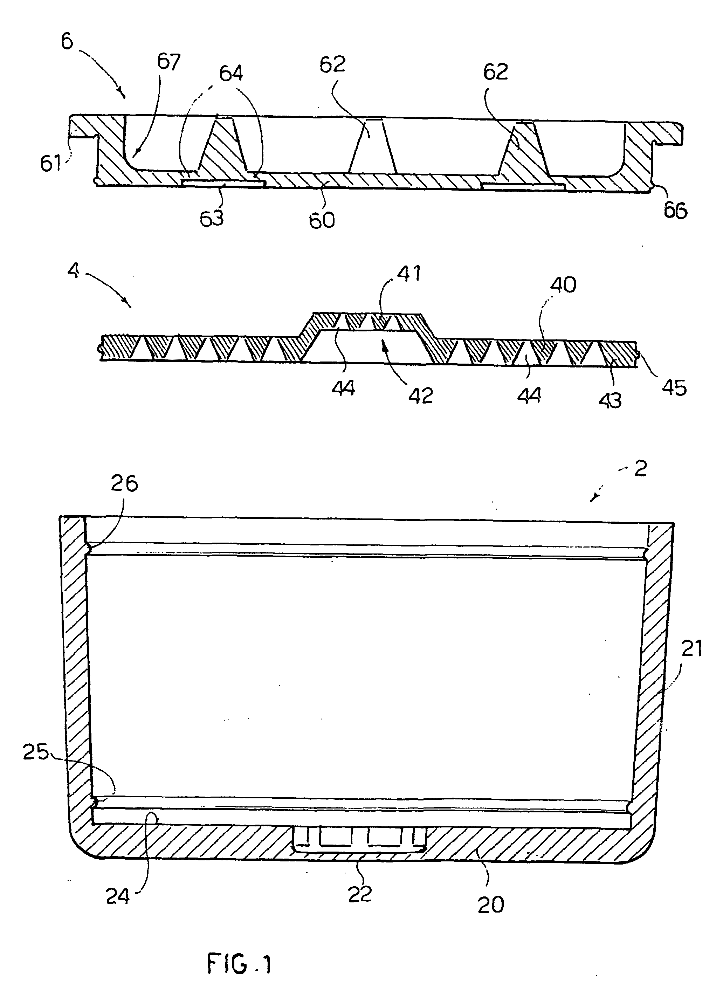

Fig. 1 shows an exploded view of a cartridge, according to the invention, designated as a whole with the reference number 1.

The cartridge 1 comprises a container 2 designed to contain coffee or a soluble product which can be in the form of granules, powder or leaves; a filter 4 designed to be positioned inside the container 2 and a lid 6 designed to provide an airtight seal to the container 2.

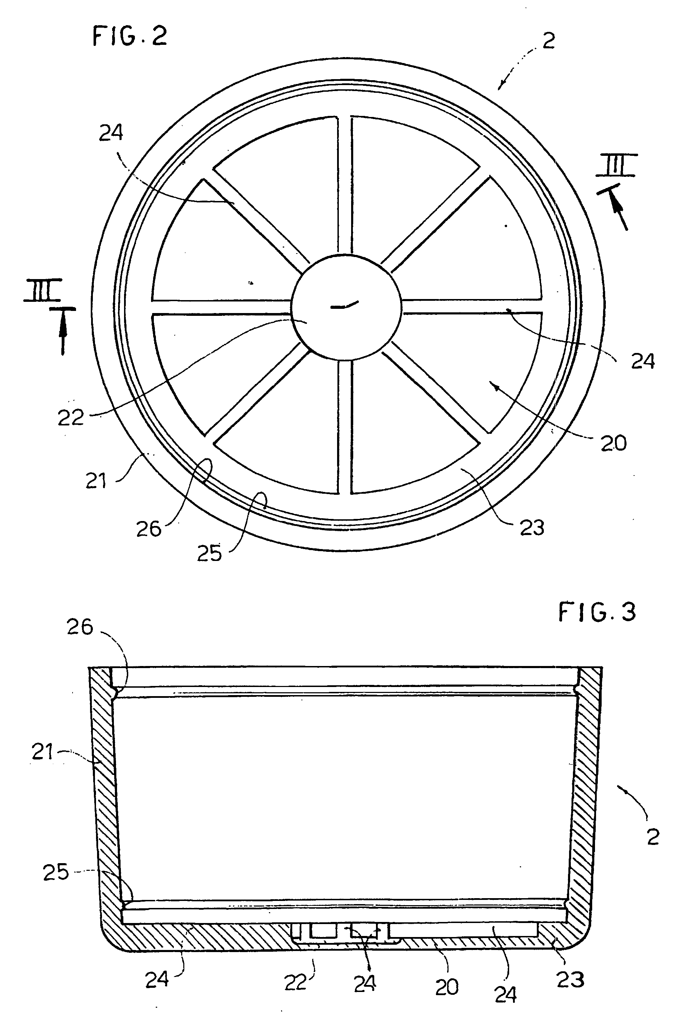

The container 2 is cup shaped, as can be seen in Figs. 2 and 3, having a cylindrical or tapered form, open at the top. The container 2 comprises a basically disc-shaped base 20, with a slightly conical wall 21 that rises up from it.

The base 20 has a thinner central portion 22 so as to form a weaker circular portion; this is set into the inner surface of the base 20. The base 20, moreover, has a thicker peripherical annular portion 23 which is in contact with the inside of the wall 21 from where it protrudes and rises upwards from the inside surface of the base 20.

On the internal surface of the base 20, between the weaker central portion 22 and the thicker annular portion 23 there are some raised radial ribs 24, having the same thickness as that of the thicker annular portion 23. As shown in Fig. 2, there should preferably be eight ribs 24 arranged equidistantly at an angle of 45° from each other.

As shown in Figs. 1 and 3, a first protruding ring or collar 25 is to be made on the inner surface of the side wall 21 of the container 2, which protrudes radially towards the inside, being set near the base 20, and a second protruding ring or collar 26 that protrudes radially towards the inside, set near the rim of the side wall 21 of the container.

The container 2 is made from a single piece by moulding in a hard plastic material such as a plastic for alimentary use, in particular polypropylene. The base 20 and the side wall 21 of the container 2 do not contain any holes; the thickness is calculated to make sure that the container has the necessary rigidity to be able to withstand high pressure for long periods of time.

As shown in Fig. 1, the filter is placed inside the container 2 so that it rests on the ribs 24 at the bottom of the container. In this way, the drink to be extracted can circulate freely between the filter 4 and the base 20 of the container 2.

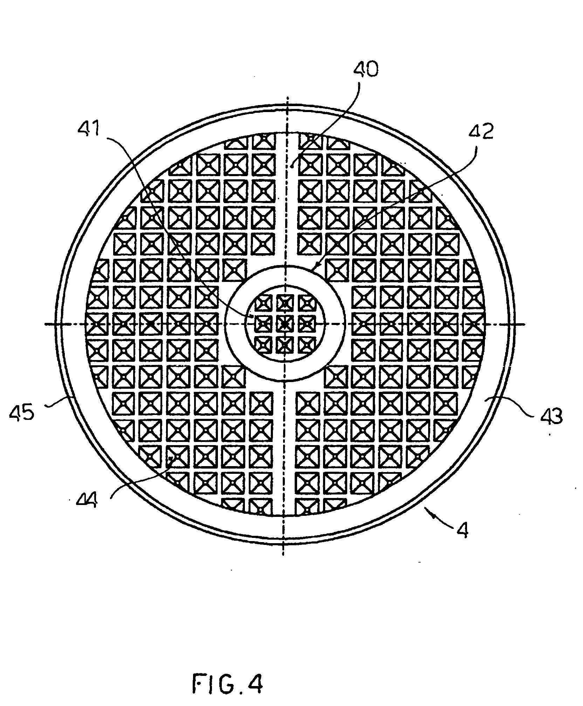

As shown in Fig. 4, the filter 4 is basically disc-shaped with an external diameter of the same size or slightly smaller than the internal diameter of the container 2, allowing the filter to be placed inside it. The filter 4 comprises a disc-shaped filter wall 40 which has a raised circular central portion 41 in such a way as to form a tapered cavity 42 that faces the base and an annular perimeter portion 43 designed to abut onto the thicker annular portion 23 of the bottom of the container.

A plurality of holes 44 are made in the filter wall 40 and in the central portion 41. The holes are defined by seats of frusto-pyramid shape, to allow the liquid drink to flow from top to bottom, but retain the granular or powdered product, above the filter 4, inside the cartridge 1.

The rim of the annular peripheric portion 43 of the filter 4 has a collar 45 that protrudes outwards radially. In this way, when the filter 4 is placed on the bottom of the container 2, the collar 45 of the filter will be under the first collar 25 of the container, so as to be held in place on the bottom of the container.

Once the filter 4 has been positioned above the base of the container 2, the container 2 is filled with coffee or soluble product which is placed over the filter 4. Now the lid 6 is placed on the upper edge of the side wall 21 of the container 2, so as to provide the container 2 with an airtight seal. To do this the lid 6 is fixed to the container 2 using heat sealing, ultrasound sealing, glue, or the like. In this way the product inside the cartridge 1 is not in contact with the outside environment and can be conserved airtight, possibly in a vacuum or with the emission of inert gasses, so as to preserve its aroma and fragrance for a long time.

The lid 6 has a disc-shaped wall 60 recessed with respect to a raised annular rim 61 that protrudes outwards radially to abut onto the rim of the side wall 21 of the container 2 to provide an airtight seal. In this way a basically cylindrical recessed housing 67 is made on the upper surface of the lid. The external diameter of the wall 60 of the lid is the same or slightly smaller than the internal diameter of the container so that it can be applied to the inside of the container. A collar 66 protrudes outwards radially from the outer wall 60 of the lid, designed to be positioned below the second collar 26 of the container so as to hold the lid down.

The lid 6, like the container 2, is made of hard plastic by injection moulding. The thickness of the wall 60 of the lid is calculated so as to obtain a rigid body designed to withstand high pressure.

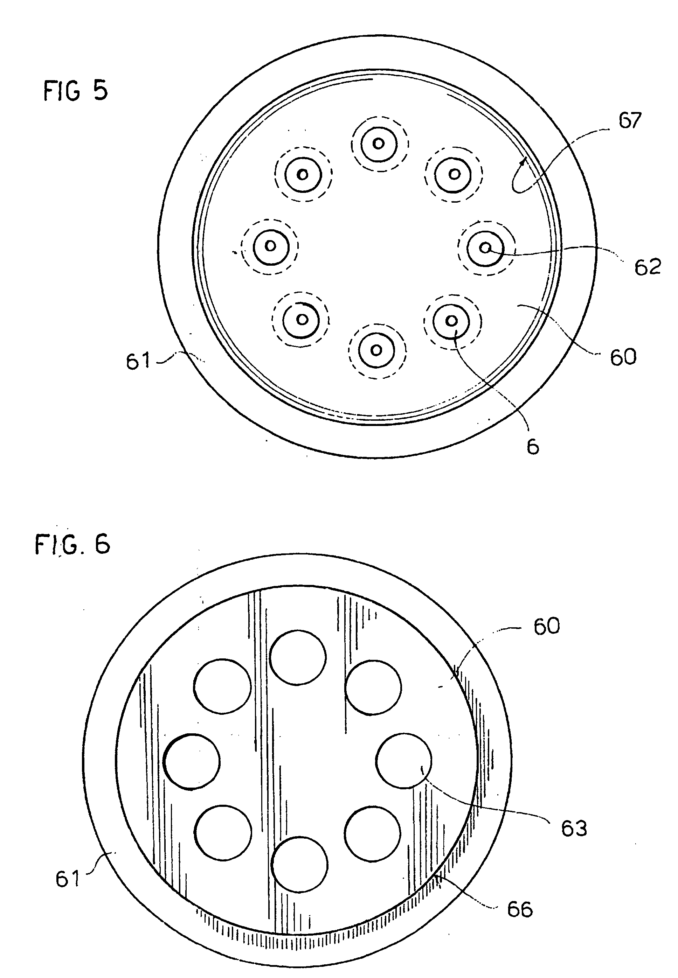

As also shown in Figs. 5 and 6, in the present embodiment of the invention, there are a plurality of protruding parts 62 on the upper surface of the lid wall 60; they have a tapered form and protrude upwards the same height as the raised annular rim 61 of the lid. There should preferably be eight of these protruding parts 62 arranged on the same circumference path, and equidistant from each other at an angle of 45°, in an intermediary area of the disc-shaped wall 60 of the lid.

The underside of the disc-shaped wall 60 of the lid contains circular cavities 63 which are in line with each of the protruding parts 62, having a slightly larger diameter than the base of the tapered projections 62, so as to provide a weakened annular point of weakness 64 around each of the protruding parts 62.

Obviously the protruding parts 62 can be of a different shape and arranged differently to those shown in the figure; cavities alone, in place of the protruding parts 62, could be used to generate points of weakness 64, or alternatively, the disc-shaped surface 60 of the lid can also be devoid of the protuberances and the points of weakness 64.

The essential condition is represented by the fact that the lid 6 does not have any through holes in it and that it be sufficiently rigid to guarantee that it is able to withstand high pressure.

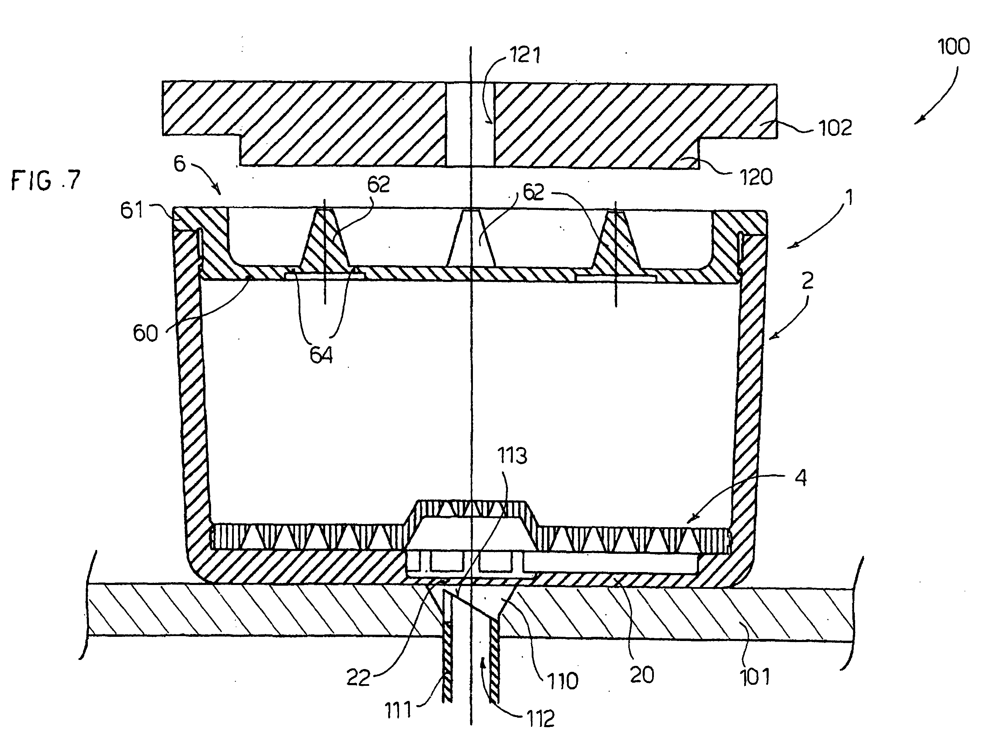

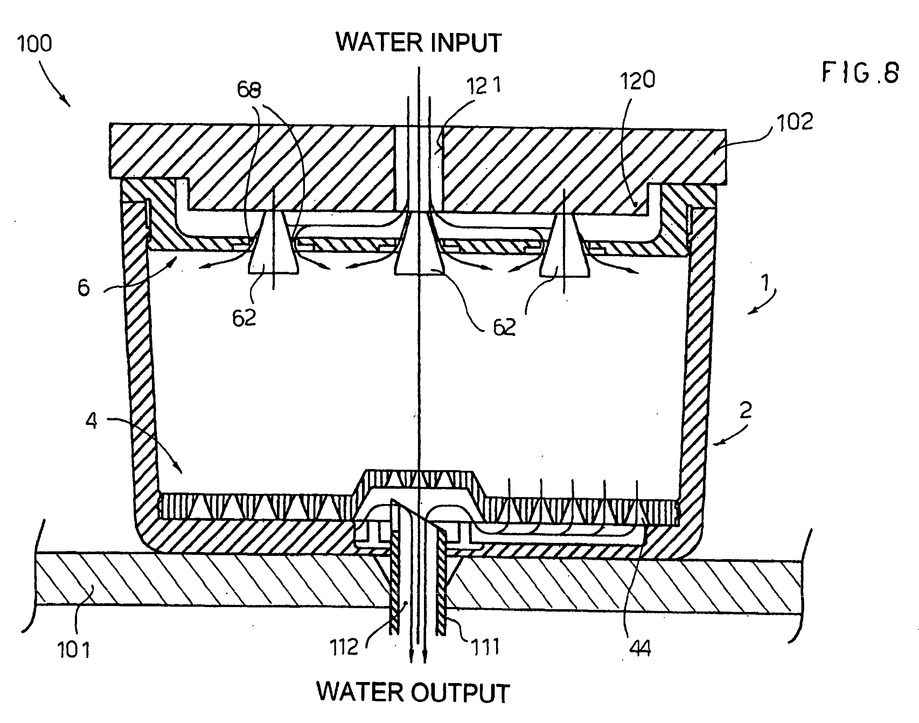

The following, with reference to Figs. 7 and 8, is a description of a device for the extraction of a drink from the cartridge 1, according to the invention. Such an extraction device, shown in its entirety with the reference number 100, comprises of a support plate 101 onto which the cartridge 1 is positioned and a pressure plate 102 set above the support plate 101 at such a height as to be above the lid 6 of the cartridge 1 when the cartridge is placed on the support plate 101.

The pressure plate 102 has a disc-shaped part 120 that protrudes below, having the same dimensions as the recessed housing 67 built into the upper surface of the lid of the cartridge, into which it fits. The pressure plate 102 contains a centrally positioned channel 121 in an axial position with respect to the disc-shaped part 120. Water under pressure is introduced through the channel 121. It is clear that this device can have more than one channel for the introduction of hot water under pressure.

The support plate 101 contains a through-flow hole 110 intended to be positioned in line with the circular point of weakness 22 in the base 20 of the container 2. In the hole 110 of the support plate there is a punch 111 basically cylindrical in shape, hollow in the inside, so as to provide a channel 112 through which the drink can flow. The punch 111 has an obliquely cut sharpened upper edge in flute mouth shape, in such as way as to provide a point designed to perforate the point of weakness 22 in the base of the container.

The punch 111 can move axially from a lowered position (Fig. 7) where it is below the point of weakness 22 in the base of the container to raised position (Fig. 8) wherein it pierces the weatness portion 22 of the base of the container in order to set it in the cavity 42 of the filter, beneath the central portion 41 of the filter. The punch 111 can also carry out a rotational, or a translatory-rotational movement to facilitate the perforation of the point of weakness in the base.

The pressure plate 102, however, can move vertically from a raised position (Fig. 7) to a lowered position (Fig. 8) where the lower part 120 of the pressure plate presses up against the protruding parts 62 of the lid 6, pushing it downwards in such a way as to break the annular points of weakness 64 on the lid. In this way, as shown in Fig. 8, an annular group of circular cavities 68 is created between the outer surfaces of the tapered protruding parts 62 and the rim 60 of the lid.

Moreover, when the pressure plate 102 is in a lowered position, its peripheral part is pressed against the raised annular rim 61 of the lid. In this way, a watertight chamber 67 is created between that part 60 of the lid and the pressure plate 102, which is then filled with pressurised hot water. Therefore pressurised hot water, coming from the duct 121 of the pressure plate 102, can flow through the cavities 68 into the cartridge 1.

It is clear that the pressure plate 102 can be fixed and the support plate 101 moved from a lowered to a raised position where, by applying upward pressure to the cartridge 1, the projections 62 of the lid are pressed up against the pressure plate 102, causing the points of weakness 64 in the lid to be broken.

The extraction device 100 according to the invention can also have a timer that selects a pressurisation time of the cartridge 1 that can be set by the user.

In order to have a drink with the cartridge 1 and the machine 100, according to the invention, the user selects a pressurisation time according to the contents of the cartridge 1 and the type of drink that the user would like to have, which means inserting the cartridge into the extraction device 100 and activating the extraction cycle. Now the upper pressure plate 102 drops, applying pressure to the projections 62 on the lid, breaking the lines of weakness 64 in the lid to form the annular group of cavities 68.

Following this, pressurised hot water passes through the duct 121 in the pressure plate before penetrating into the cartridge 1 by way of the cavities 68 in the lid, where it comes into contact with the coffee or soluble product contained in the cartridge 1.

Now the inside of the cartridge is pressurised by the hot water. The pressurisation of the water, and as a result the inside of the cartridge, is maintained for the time pre-set by the user, by way of the timer. This allows the products' aromas inside the cartridge to be released into the pressurised hot water, and the subsequent production of the drink. It should be noted that as the cartridge is made of hard plastic and the fact that it is held inside a watertight container, means that pressurisation can be maintained for the desired amount of time, without a risk of the cartridge losing shape.

When the pre-set pressurisation time is over, the punch is raised to the raised position so as to perforate the central weak point 22 in the base of the container 2. The result is that the drink formed in the cartridge, by passing through the holes 44 of the filter, flows through the duct 112 of the punch and is collected in a cup placed beneath the extraction device 100 by the user.

Numerous variations and modifications of detail can be carried out to the present embodiment of the invention within the reach of a person skilled in the art, while remaining within the scope of the invention, as set forth in the appended Claims.

## Claims

1. Cartridge (1) for coffee or soluble products for the production of a drink, comprising:
- a container (2) designed to contain coffee or soluble product,
- a lid (6) set on top of the container so as to provide an upper wall (60) through which hot water under pressure is introduced into the container (2) in order to produce the drink,
- a filter (4) designed to be positioned inside said container (2) above a base (20) of the container through which the drink can pass,
wherein
- said cartridge is produced with an airtight seal, in a hard plastic material,
- said upper wall (60) of the lid having perforable parts to allow hot water under pressure to enter and to held inside the cartridge (1) and
- said base (20) of the container containing perforable parts to allow the drink to be extracted from the cartridge (1),
**characterised in that**
said lid (6) comprises protruding parts (62) which protrude outwards and upwards, designed to be pressed so as to generate the breaking of the lid around protruding parts (62) for forming cavities (68) designed to allow hot water under pressure to input into the cartridge (1)

2. Cartridge (1) according to Claim 1, **characterised by** the fact that said lid (6) is fixed to said container (2) by means of heat sealing or ultrasound sealing.

3. Cartridge (1) according to Claims 1 or 2, **characterised by** the fact that said lid (6) has some pre-set breaking points or points of weakness (64), designed to be broken, for the formation of cavities (68) through which hot water under pressure can pass into the cartridge (1).

4. Cartridge (1) according to any one of the previous Claims, **characterised in that** said protruding parts (62) on the lid have a basically tapered shape.

5. Cartridge (1) according to any one of the previous claims, **characterised in that** said base (20) of the container has a varied thickness, so as to provide a thinner weakened portion (22), designed to be pierced for the extraction of the drink from the cartridge (1).

6. Cartridge (1) according to any one of the previous claims, **characterised in that** the internal surface of the base (20) has some ribs (24), designed to support said filter (4) so as to provide a chamber between said filter (4) and said base (20) through which the filtered drink can pass.

7. Cartridge (1) according to any one of the previous claims, **characterised in that** said filter (4) has a raised part (41) so as to provide a housing (42) positioned in the area where said base (20) has to be pierced, in order to receive the means that will pierce the base of the container.

8. Cartridge (1) according to any one of the previous claims, **characterised in that** is has a basically tapered form.

9. Cartridge (1) according to any one of the aforementioned claims, **characterised in that** it is produced by injection moulding in a hard plastic material, such as polypropylene or the like.

10. Device (100) for the extraction of a drink from a cartridge (1) containing coffee or soluble product, comprising:
- a cartridge (1),
- a support plate (101) on which the base (20) of the cartridge (1) is positioned,
- means of applying pressure (102, 121) positioned above said cartridge (1), when it is on said support plate (101), said means of applying pressure (102) designed to introduce hot water under pressure into the cartridge (1), and
- means of extraction (111) positioned beneath said support plate (101) to allow the drink to be extracted from the said cartridge, wherein
- said cartridge (1) is airtight, and made of a hard plastic material,
- said means of applying pressure (102) is suitable to co-operate with the upper wall (60) of said cartridge in order to cause perforations (68) in said upper surface (60) for the introduction of hot water under pressure into the cartridge, and
- said means of extraction (111) are suitable to co-operate with the base (20) of said cartridge so as to cause the base (20) to be pierced so that the drink can flow out of the cartridge,
**characterised in that**
- said means of applying pressure comprises a pressure plate (102) containing a duct (121) through which hot water under pressure is introduced, said pressure plate (102) is suitable to apply pressure to projections (62) on the upper surface (60) of the cartridge, so as to cause the cartridge to break around said projections for the introduction of hot water under pressure into the cartridge.

11. Device (100) according to Claim 10, **characterised by** the fact that the means of extraction comprises a punch (111) that through a hole (120) in the said support plate (101) for pierce the base (20) of the cartridge, said punch (111) having a through hole or internal duct (112) to allow the drink to pass through it.

12. Device (100) according to claim 10 or 11, **characterised by** the fact that it includes a timer capable of being set by the operator, in order to select the pressurisation time of said cartridge (1).

13. Method of production of a drink from a cartridge (1) containing coffee or soluble product, said cartridge (1) being airtight and produced in a hard plastic material, the method of production involving the following steps:
- perforation of the upper part (60) of said cartridge for the introduction of hot water under pressure into the cartridge,
- pressure maintained inside the cartridge for a optimum pre-set time, so that the aromas in the coffee or soluble product dissolve in the water, and
- piercing of the base (20) of said cartridge for the extraction of the drink from said cartridge,
**characterised in that**
the perforation of the upper part (60) of said cartridge is performed applying pressure to projections (62) on the upper surface (60) of the cartridge, so as to cause the cartridge to break around said projections for the introduction of hot water under pressure into the cartridge.

## Patentansprüche

1. Ein Einsatz (1) für Kaffee oder lösliche Produkte zur Herstellung eines Getränks, der folgendes umfasst:
- einen Behälter (2), der geeignet ist, Kaffee oder ein lösliches Produkt zu enthalten,
- einen Deckel (6), der auf dem Behälter angeordnet ist, und zwar so, dass er eine obere Wand (60) bildet, durch die heißes Wasser unter Druck in den Behälter (2) geschleust wird, um das Getränk herzustellen,
- einen Filter (4), der geeignet ist, innen in dem genannten Behälter (2) über einem Boden (20) des Behälters angeordnet zu werden, durch den das Getränk fließen kann,
wobei
- der genannte Einsatz mit einem luftdichten Verschluss aus hartem Kunststoffmaterial hergestellt wird,
- die genannte obere Wand (60) des Deckels perforierbare Bereiche aufweist, damit das heiße Wasser unter Druck in den Einsatz (1) fließen und dort bleiben kann, und
- der genannte Boden (20) des Behälters perforierbare Bereiche aufweist, damit das Getränk aus dem Einsatz (1) heraus fließen kann,
**dadurch gekennzeichnet, dass**
der genannte Deckel (6) vorstehende Teile (62) umfasst, die nach außen und oben vorstehen und geeignet sind, gedrückt zu werden, um den Bruch des Deckels rund um die vorstehenden Teile (62) hervorzurufen, damit Hohlräume (68) entstehen, durch die heißes Wasser unter Druck in den Einsatz (1) fließen kann.

2. Ein Einsatz (1) gemäß Anspruch 1, **dadurch gekennzeichnet, dass** der genannte Deckel (6) an dem genannten Behälter (2) mit Hilfe von Heiß- bzw. Ultraschallversiegelung befestigt ist.

3. Ein Einsatz (1) gemäß Anspruch 1 oder 2, **dadurch gekennzeichnet, dass** der genannte Deckel (6) einige vorbestimmte Bruchstellen oder Schwachstellen (64) aufweist, die dazu bestimmt sind, zerbrochen zu werden, und zwar zwecks Bildung von Hohlräumen (68), durch die heißes Wasser unter Druck in den Einsatz (1) fließen kann.

4. Ein Einsatz (1) gemäß einem beliebigen der vorausgegangenen Ansprüche, **dadurch gekennzeichnet, dass** die genannten vorstehenden Teile (62) am Deckel eine sich kegelförmig verjüngende Form aufweisen.

5. Ein Einsatz (1) gemäß einem beliebigen der vorausgegangenen Ansprüche, **dadurch gekennzeichnet, dass** der genannte Boden (20) des Behälters eine unterschiedliche Stärke aufwiest, so dass ein dünnerer, schwächerer Bereich gebildet wird, der zwecks Ausfließen des Getränks aus dem Einsatz (1) durchstochen werden kann.

6. Ein Einsatz (1) gemäß einem beliebigen der vorausgegangenen Ansprüche, **dadurch gekennzeichnet, dass** die innere Oberfläche des Bodens (20) einige Rippen (24) aufweist, die dazu bestimmt sind, den genannten Filter (4) zu halten, damit eine Kammer zwischen dem genannten Filter (4) und dem genannten Boden (20) entsteht, durch die das gefilterte Getränk fließen kann.

7. Ein Einsatz (1) gemäß einem beliebigen der vorausgegangenen Ansprüche, **dadurch gekennzeichnet, dass** der genannte Filter (4) erhöhte Bereiche (41) aufweist, um einen Sitz (42) zu bilden, der in dem Bereich angeordnet ist, in dem der genannte Boden (20) durchstoßen werden muss, um das Perforationselement aufzunehmen, das den Boden des Behälters durchstoßen wird.

8. Ein Einsatz (1) gemäß einem beliebigen der vorausgegangenen Ansprüche, **dadurch gekennzeichnet, dass** er eine im wesentlichen sich keilförmig verjüngende Form aufweist.

9. Ein Einsatz (1) gemäß einem beliebigen der vorausgegangenen Ansprüche, **dadurch gekennzeichnet, dass** er durch Spritzgussverfahren aus hartem Kunststoffmaterial hergestellt wird, wie beispielsweise Polypropylen o.ä.

10. Eine Vorrichtung (100) zur Entnahme eines Getränks aus einem Einsatz (1), der Kaffee oder ein lösliches Produkt enthält, welche folgendes umfasst:
- einen Einsatz (1),
- eine Auflagefläche (101), auf der der Boden (20) des Einsatzes (1) angeordnet ist,
- Element zur Druckausübung (101, 102), das über dem genannten Einsatz (1) angeordnet ist, wenn dieser sich auf der genannten Auflagefläche (101) befindet,
wobei das genannte Element zur Druckausübung (102) dazu bestimmt ist, heißes Wasser unter Druck in den Einsatz (1) fließen zu lassen, und
- Entnahmeelemente (111), die sich unterhalb der genannten Auflagefläche (101) befinden, damit das Getränk dem genannte Einsatz entnommen werden kann, wobei
- der genannte Einsatz (1) luftdicht und aus hartem Kunststoffmaterial ist,
- das genannte Element zur Druckausübung (102) geeignet ist, mit der oberen Wand (60)
des genannten Einsatzes zusammenzuarbeiten, um Perforierungen (68) in der genannten oberen Fläche (60) zum Einlassen von heißem Wasser unter Druck in den Einsatz herzustellen, und
- die genannten Entnahmeelemente (111) geeignet sind, mit dem Boden (20) des genannten Einsatzes zusammenzuarbeiten, damit der Boden durchstoßen werden kann, so dass das Getränk aus dem Einsatz fließen kann,
**dadurch gekennzeichnet, dass**
- das genannte Element zur Druckausübung eine Druckplatte (102) umfasst, die ein Rohr (121) aufweist, durch das heißes Wasser unter Druck fließt, wobei die genannte Druckplatte (102) geeignet ist, Druck auf Vorsprünge (62) an der oberen Fläche (60) des Einsatzes auszuüben, so dass der Bruch des Einsatzes rund um die genannten Vorsprünge zwecks Einströmen von heißem Wasser unter Druck in den Filter veranlasst wird.

11. Eine Vorrichtung (100) gemäß Anspruch 10, **dadurch gekennzeichnet, dass** das Entnahmeelement einen Stanzer (111) umfasst, der eine Öffnung (120) in der genannten Auflagefläche (101) durchquert, um die Bodenwand (20) des Einsatzes zu perforieren, wobei der genannte Stanzer (111) mit einem inneren Durchlass (112) zum Austreten des Getränks ausgerüstet ist.

12. Eine Vorrichtung (100) gemäß Anspruch 10 oder 11, **dadurch gekennzeichnet, dass** sie einen Timer umfasst, der vom Bediener eingestellt werden kann, um die Zeit der Unterdrucksetzung des genannten Einsatzes (1) zu wählen.

13. Eine Herstellungsmethode für ein Getränk aus einem Einsatz (I), der Kaffee oder ein lösliches Produkt enthält, wobei der genannte Einsatz (1) luftdicht und aus hartem Kunststoffmaterial ist und die Herstellungsmethode folgende Schritte umfasst:
- die Perforation des oberen Teils (60) des genannten Einsatzes für den Einlass von heißem Wasser unter Druck in den Einsatz,
- die Beibehaltung des Drucks innerhalb des Einsatzes während einer optimalen, voreingestellten Zeit, so dass die Aromen des Kaffees oder des löslichen Produktes sich im Wasser lösen, und
- das Durchstoßen des Bodens (20) des genannten Einsatzes zur Entnahme des Getränks aus dem genannten Einsatz,
**dadurch gekennzeichnet, dass**
die Perforation des oberen Teils (60) des genannten Einsatzes stattfindet, indem Druck auf die Vorsprünge (62) an der oberen Fläche (60) des Einsatzes ausgeübt wird, so dass der Bruch des Einsatzes rund um die genanten Vorsprünge zwecks Einströmen des heißen Wassers unter Druck in den Einsatz bewirkt wird.

## Revendications

1. Cartouche (1) pour café et produits solubles pour la production d'une boisson comprenant :
- un récipient (2) conçu pour contenir du café ou un produit soluble,
- un couvercle (6) placé sur le haut du récipient de façon à définir une paroi supérieure (60) à travers laquelle de l'eau chaude sous pression est introduite dans le récipient (2) afin de produire la boisson,
- un filtre (4) conçu pour être placé à l'intérieur dudit récipient (2) au-dessus d'une base (20) du récipient à travers laquelle la boisson peut passer,
où
- ladite cartouche est réalisée avec une fermeture hermétique à l'air, dans une matière plastique dure,
- ladite paroi supérieure (60) du couvercle présentant des parties pouvant être perforées pour permettre l'introduction d'eau chaude sous pression et le maintien de l'eau chaude sous pression à l'intérieur de la cartouche (1), et
- ladite base (20) du récipient contenant des parties pouvant être perforées de manière à permettre l'extraction de la boisson de la cartouche (1),
**caractérisée en ce que**
ledit couvercle (6) comprend des parties saillantes (62) qui sortent en saillie vers l'extérieur et vers le haut, conçues pour être comprimées afin de créer la rupture du couvercle autour des parties saillantes (62) pour former des cavités (68) conçues pour permettre à l'eau chaude sous pression de pénétrer dans la cartouche (1).

2. Cartouche (1) selon la revendication 1, **caractérisée en ce que** ledit couvercle (6) est fixé audit récipient (2) au moyen d'une thermo-soudure ou d'une soudure à ultrasons.

3. Cartouche (1) selon la revendication ou 2, **caractérisée en ce que** ledit couvercle (6) présente certains points de rupture ou points de faiblesse prédéfinis (64), conçus pour être cassés, pour la formation de cavités (68) à travers lesquelles l'eau chaude sous pression peut passer dans la cartouche (1).

4. Cartouche (1) selon une revendication quelconque parmi les revendications susmentionnées, **caractérisée en ce que** lesdites parties saillantes (62) sur le couvercle présentent une configuration essentiellement en forme de cône.

5. Cartouche (1) selon une revendication quelconque parmi les revendications susmentionnées, **caractérisée en ce que** ladite base (20) du récipient présente une épaisseur variable, de manière à définir une zone de faiblesse à plus petite épaisseur (22), conçue pour être percée pour l'extraction de la boisson de la cartouche (1).

6. Cartouche (1) selon une revendication quelconque parmi les revendications susmentionnées, **caractérisée en ce que** la surface interne de la base (20) présente des nervures (24), conçues pour soutenir ledit filtre (4) de manière à définir une chambre entre ledit filtre (4) et ladite base (20) à travers laquelle la boisson filtrée peut passer.

7. Cartouche (1) selon une revendication quelconque parmi les revendications susmentionnées, **caractérisée en ce que** ledit filtre (4) présente une partie surélevée (41) de manière à définir un logement (42) placé dans la zone où ladite base (20) doit être percée, afin d'accueillir le dispositif qui percera la base du récipient.

8. Cartouche (1) selon une revendication quelconque parmi les revendications susmentionnées, **caractérisée en ce qu'**elle est essentiellement réalisée en forme de cône.

9. Cartouche (1) selon une revendication quelconque parmi les revendications susmentionnées, **caractérisée en ce qu'**elle est réalisée au moyen d'un moulage par injection de matière plastique dure, telle que du polypropylène ou de matières similaires.

10. Dispositif (100) d'extraction d'une boisson à partir d'une cartouche (1) contenant du café ou un produit soluble, comprenant :
- une cartouche (1),
- un plan d'appui (101) sur lequel la base (20) de la cartouche (1) est placée,
- un dispositif de pressurisation (102, 121) placé au-dessus de ladite cartouche (1), quand elle se trouve sur ledit plan d'appui (101), ledit dispositif de pressurisation (102) conçu pour introduire de l'eau chaude sous pression dans la cartouche (1), et
- un dispositif d'extraction (111) placé sous ledit plan d'appui (101) pour permettre l'extraction de la boisson de ladite cartouche où
- ladite cartouche (1) est à fermeture hermétique à l'air et réalisée dans une matière plastique dure,
- ledit dispositif de pressurisation (102) est prévu pour coopérer avec la paroi supérieure (60) de ladite cartouche de manière à provoquer des perforations (68) dans ladite surface supérieure (60) pour l'introduction d'eau chaude sous pression dans la cartouche, et
- ledit dispositif d'extraction (111) est prévu_pour coopérer avec la base (20) de ladite cartouche de manière à provoquer la perforation de la base (20) de manière à ce que la boisson puisse sortir de la cartouche, **caractérisé en ce que**
- ledit dispositif de pressurisation comprend une plaque de pression (102) contenant un conduit (121) à travers lequel l'eau chaude sous pression est introduite, ladite plaque de pression (102) est prévue pour appliquer de la pression sur des saillies (62) se trouvant sur la surface supérieure (60) de la cartouche, de façon à provoquer la rupture de la cartouche autour desdites saillies pour l'introduction d'eau chaude sous pression dans la cartouche.

11. Dispositif (100) selon la revendication 10, **caractérisé en ce que** le dispositif d'extraction comprend une pointe (111) qui traverse un orifice (120) dans ledit plan d'appui (101) pour percer la base (20) de la cartouche, ladite pointe (111) présentant un orifice de passage ou conduit interne (112) pour permettre à la boisson de sortir de celui-ci.

12. Dispositif (100) selon la revendication 10 ou 11, **caractérisé en ce qu'**il comprend une minuterie en mesure d'être réglée par l'opérateur, de manière à sélectionner le temps de pressurisation de ladite cartouche (1).

13. Méthode de production d'une boisson à partir d'une cartouche (1) contenant du café ou un produit soluble, ladite cartouche (1) étant hermétique à l'air et réalisée dans une matière plastique dure, la méthode de production comprenant les étapes suivantes:
- perforation de la partie supérieure (60) de ladite cartouche pour l'introduction d'eau chaude sous pression dans la cartouche,
- maintien sous pression à l'intérieur de la cartouche pendant un temps optimum préréglé, de manière à ce que les arômes du café ou du produit soluble se dissolvent dans l'eau, et
- perforation de la base (20) de ladite cartouche pour l'extraction de la boisson de ladite cartouche,
**caractérisée en ce que**
la perforation de la partie supérieure (60) de ladite cartouche est réalisée en appliquant de la pression sur des saillies (62) se trouvant sur la surface supérieure (60) de la cartouche, de manière à provoquer la rupture de la cartouche autour desdites saillies pour l'introduction d'eau chaude sous pression dans la cartouche.
